# EUROPÄISCHE PATENTANMELDUNG

(11) **EP 0 981 084 A1**
(43) Veröffentlichungstag der Anmeldung: **23.02.2000**
(21) Anmeldenummer: 98115450.3
(22) Anmeldetag: 17.08.1998
(51) Int. Cl.: G06F 9/46

(54) **Verfahren zur Steuerung der Datenverteilung in einem Rechnersystem**

(71) Anmelder: SIEMENS AKTIENGESELLSCHAFT, 80333 München (DE)
(72) Erfinder: Schwarzmann, Bernd, Dipl. Math. Cand.rer.pol., 86152 Augsburg (DE)

(57) **Zusammenfassung**

An eine Datenverteilkomponente eines Systems geht im Systemhochlauf oder bei der Konfiguration einzelner Plattformen des Systems der Auftrag, alle oder bestimmte Plattformen mit Daten zu laden. Bisher gab es für die Datenverteilung eine feste, d.h. hartcodierte Zuordnung, welche Daten wann wohin geladen werden. Gemäß der Erfindung wird der Datenverteilkomponente nunmehr über von den Datenbasen selbst gelieferte 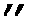 Metadaten" angegeben, wohin und wie die Daten verteilt werden sollen.

## Beschreibung

In einem hierarchischen, verteilten System, das mehrere Plattformen (eine Plattform ist hier als eine Arbeitseinheit (Rechner) zu verstehen, d.h sie entspricht einem einzelnen Prozessor in einem Mehrprozessorsystem) umfaßt, werden z.B. im Systemhochlauf von der zentralen Plattform (CP=Central Processor) des Systems aus Daten verschiedenster Art auf periphere Plattformen verschiedenen Typs verteilt.

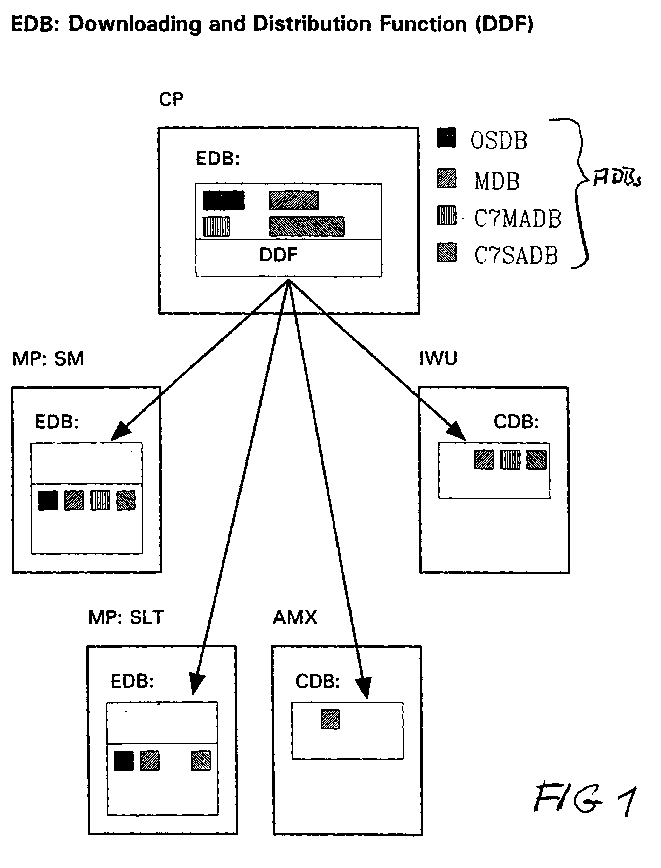

FIG 1 zeigt ein bsph. verteiltes System mit folgenden Plattformen:
- einem Zentralprozessor CP
- MP-Plattformen (MP = Main Processor) mit Funktionalität SM (SM = #7-Maintenance)
- MP-Plattformen (MP = Main Processor) mit Funktionalität SLT (SLT = #7-Nachrichtenverkehr)
- AMX-Plattformen (AMX = ATM-Multiplexer) für die ATM-Weit
- IWU-Plattformen (IWU = Interworking Unit) für den Übergang zum 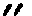 alten" System EWSD (LTG)

Ein Datenbasissystem EDB bzw. CDB einer Plattform ist untergliedert in mehrere Anwender-Datenbasen ADB (in FIG 1 z.B. operating system data base QSDB, Maintenance data base MDB,....), die zu genau definierten Zeitpunkten des Systemhochlaufs an die Peripherie verteilt werden sollen. Die zu ladenden Daten befinden sich - wie in der objektorientierten Programmierung üblich - in 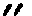 Objektklassen" und können über generische Zugriffsprozeduren, die Teil der Objektklasse sind, angesprochen werden.

An eine Datenverteilkomponente DDF, die im folgenden auch als Datenverteilfunktion (DDF=Data Distribution Function) bezeichnet wird, geht im Systemhochlauf oder bei der Konfiguration einzelner Plattformen der Auftrag, alle oder bestimmte Plattformen im System mit Daten zu laden. Da die Daten in mehrere ADBs (ADB = Application Data Bases = Anwender-Datenbasen) untergliedert sind, die zu unterschiedlichen Zeiten geladen werden sollen, und mehrere periphere Plattformen vorliegen, ist die Bestimmung der Frage, welche Daten wann wohin geladen werden sollen, sehr kompliziert.

Zudem sollen die Daten auf eine effiziente Art gesammelt und verteilt werden, um den Systemhochlauf insgesamt möglichst schnell zu gestalten.

Bisher gab es für die Datenverteilung eine feste Zuordnung, welche Daten wann wohin geladen werden (hartkodierte Verteilinformation, d.h. Verteilinformation in der DDF-Software). Bei einer Änderung in der Reihenfolge, bei neuen Daten oder neuen Plattformen hat dies z.T. erheblichen Änderungsaufwand, oft komplette Neukodierung und große Fehlerrisiken nach sich gezogen.

Das genannte Problem wird umso größer, je mehr sich mit neuen Projekten die Anzahl der Plattformtypen und die Zahl der unterschiedlichen Datenbasen (ADBs) erhöht.

Der Erfindung liegt die Aufgabe zugrunde, ein Verteiltes System bzw. ein Verfahren zur Steuerung der Datenverteilung in einem verteilten System anzugeben, das die genannten Probleme löst.

Diese Aufgabe wird durch ein Verfahren gemäß Anspruch 1 bzw eine Verteiltes System gemäß Anspruch 6 gelöst.

Durch die Erfindung ergeben sich mehrere Vorteile:
- Unabhängigkeit von Änderungen, wohin die Daten verteilt werden
- Unabhängigkeit von Änderungen in der Reihenfolge der Verteilung
- Unabhängigkeit von der Einführung neuer Zielplattformtypen neuer Ladetypen
- Unabhängigkeit von der Einführung neuer Datenbasen (ADBs)
- Effizientes und schnelles Datensammeln, da Datengruppen in sogenannten Ladetypen zusammengefaßt und per 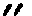 Broadcast" verteilt werden (können)
- weniger Änderungsaufwand bedeutet auch weniger Fehlerrisiko
- einfache Pflege und Änderung der Datenzuordnungen bei den Dateneigentümern, weil die Datenzuardnungen gebündelt in sog. 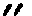 Table Announcements" zu finden sind
- Testbarkeit: der Mechanismus 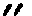 tabellengesteuerte Datenverteilung" läßt sich sehr gut in einer frühen Phase testen; unabhängig von der Verfügbarkeit der restlichen Software, unabhängig von der Verfügbarkeit der ADBs
- geringer Kodieraufwand und Testaufwand: es werden immer die gleichen Programmzweige, nur mit unterschiedlichen Metadaten durchlaufen.

Im folgenden wird ein Ausführungsbeispiel (e) der Erfindung anhand der Zeichnung näher erläutert.

Die Erfindung basiert auf der Idee, daß die Eigentümer (Owner) einer ADB, d.h. die Verantwortlichen für eine ADB, der DDF (über in entsprechenden Tabellen enthaltene 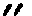 Metadaten") angeben, wohin und wie ihre Daten verteilt werden sollen. Die DDF selektiert anhand dieser Metadaten die auf dem CP zu sammelnden Daten und verteilt diese an die peripheren Einheiten.

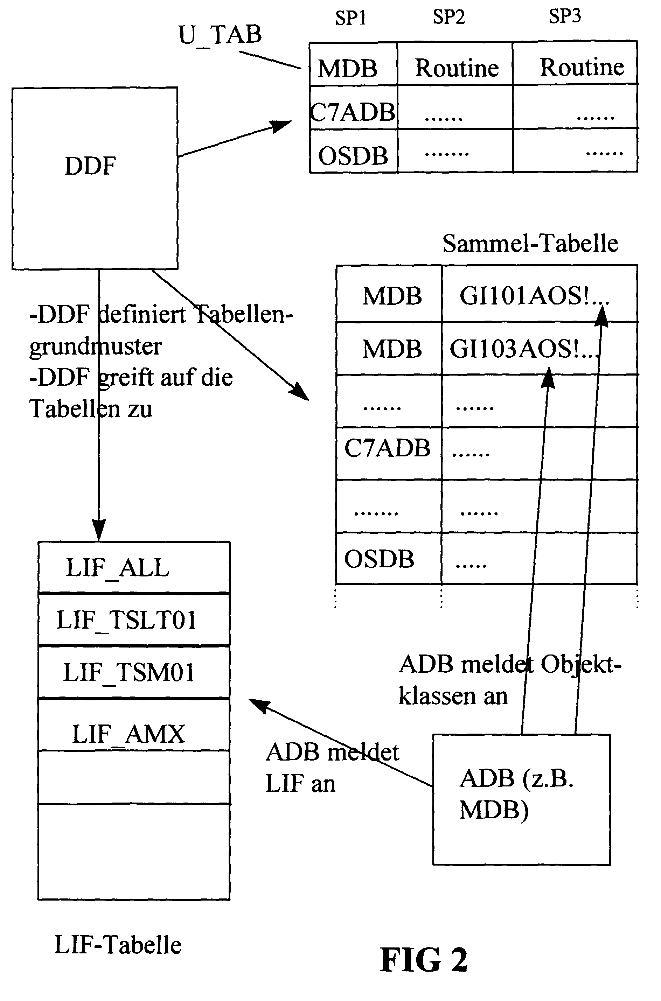

Im folgenden wird anhand von FIG 2 das Erzeugen und Belegen der genannten Tabellen genauer erläutert, die das erfgem Verfahren anhand der in ihnen enthaltenen 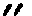 Metadaten" steuern.

Die Daten einer ADB befinden sich in Objektklassen, die der ADB zugeordnet sind.

Für die Metadaten werden in der DDF ebenfalls Objektklassen definiert, die Grundmuster für Tabellen darstellen, z.B. das Grundmuster für eine Ladetyp-Tabelle LIF und eine Sammel-Tabelle.

In die Ladetyp-Tabelle werden die verschiedenen Ladetypen der ADBs des Systems eingetragen. Um diese Eintragungen zu bewirken, werden die von einer ADB benötigten Ladetypen in der ADB selbst deklariert, wobei diese Deklaration als 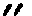 Table Announcement" bezeichnet wird.

Zusätzlich zu diesem ersten Table Announcement werden durch ein zweites Table Announcement die einem Ladetyp zugeordneten Objektklassen angemeldet, was das Eintragen von Adressen der pro Ladetyp aufzurufenden Sammelroutinen in die zugehörige Sammel-Tabelle zur Folge hat.

Die Daten einer ADB befinden sich in Objektklassen, die der ADB zugeordnet sind. Um diese Zuordnung der Objektklassen zu einer ADB speichern zu können, vergeben die ADB-Owner interne Nummern für die Objektklassen. Zusammen mit der von DDF vergebenen ADB-Nummer kann daher jede Objektklasse auf einen Wert (Tabellenindex) abgebildet werden, unter dem ein Tabelleneintrag (ADB Kennzeichen, Adresse der Prozedur bzw. Routine zum Datensammeln) in die Sammeltabelle eines Ladetyps gemacht wird.

Durch die Table Announcements des folgenden Beispiels werden für die Objektklasse 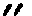 Inst-HW-MTC-Unit-Semi" des Ladetyps LIF_INDIVIDUAL (plattformindividuelle Daten) und des Ladetyps LIF_AMXA (AMX-Daten) in die Sammel-Tabelle unter dem jeweiligen Tabellenindex die genannten Einträge gemacht. Daten-Owner und anmeldende ADB ist die MDB.

Beispiel: ADB ist die Maintenance Data Base MDB. Für diese Objektklasse werden in die Sammel-Tabelle des jeweiligen Ladetyps unter dem genannten Tabellenindex die genannten Einträge gemacht. Es gibt für jeden Ladetyp eine Sammel-Tabelle für die Bestimmung, welche Datensammelroutinen für den Ladetyp relevant sind.

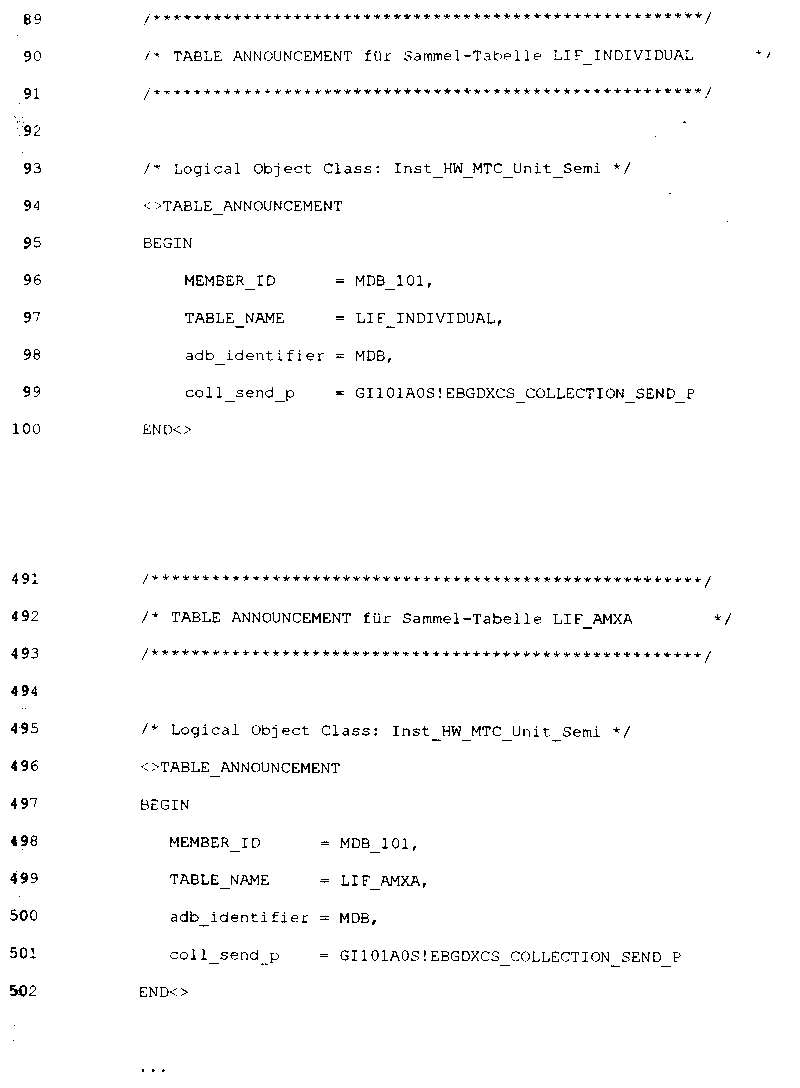

Im Beispiel wird die Objektklasse 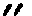 Inst-HW-MTC-Unit-Semi" (und damit die Adresse ihrer Sammelroutine) in zwei Sammeltabellen eingetragen, d.h. für zwei Ladetypen eingetragen. Eine Objektklasse beinhaltet also Daten einer ADB, die im Systemhochlauf an verschiedene Plattformen, eventuell auch zu unterschiedlichen Zeitpunkten, verteilt werden sollen.

Die benötigten Ladetypen (im Bsp. also LIF_AMXA und LIF_INDIVIDUAL, in der Praxis noch mehr) müssen von der ADB (hier die MDB=Maintenance Database) noch in die Ladetyp-Tabelle LIF eingetragen werden, damit die Zuordnung der ADB zu Ladetypen (siehe unten) funktioniert.

Im folgenden wird das Sammeln und Verteilen der Daten (Ablauf der DDF) näher erläutert, das in mehreren Schritten geschieht:

Die DDF im CP wird von einer den Systemhochlauf steuernden Software für jede zu ladende ADB eigens aufgerufen, weil die ADBs zu unterschiedlichen Zeitpunkten im Systemhochlauf zu laden sind. Bei diesem Aufruf werden der DDF die zu ladenden Plattformen als Input übergeben.
a) Aus der/den mit der jeweiligen ADB zu ladenden Plattform/en ermittelt DDF durch Aufruf einer in einer Umrechnungs-Tabelle U TAB enthaltenen Umrechnungsroutine (siehe Spalte SP2 der Umrechnungstabelle in FIG 2), die DDF von der ADB (durch ein entsprechendes Table Announcement ) bereitgestellt wird, eine Liste von Ladetypen, die abgearbeitet werden müssen. (Zum besseren Verständnis: Ein 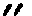 Ladetyp" beinhaltet Objektklassen, die auf irgendeine Weise funktional oder logisch zusammengehören. Beispiel: Der Ladetyp 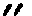 TSM00001" faßt Objektklassen zusammen, die mit der SM-Funktionalität zu tun haben. Objektklassen können aber auch mehreren Ladetypen zugeordnet sein. Es ist oft so, daß zu einem bestimmten Plattformtyp auch ein bestimmter Ladetyp gehört (z.B. der Ladetyp 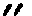 TSM00001" zu dem Plattformtyp 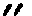 MP mit Funktionalität SM"), doch ist dies keineswegs vorgeschrieben oder zwingend für die Erfindung, d.h. ein Ladetyp kann durchaus für mehrere Plattformtypen vorgesehen sein ).
b) Schleife: Für jeden Ladetyp aus der Liste von Ladetypen nach a) sind die nachfolgenden Schritte c) bis f) auszuführen:
c) Ermittlung derjenigen Plattformen aus den insgesamt zu ladenden Plattformen, die zu dem Ladetyp gehören, d.h. die mit den Daten des Ladetyps zu laden sind). Die von der DDF hierzu in Spalte SP3 der Umrechnungstabelle U_TAB aufzurufende Routine wird von der ADB durch ein entsprechendes Table Announcement bereitgestellt.
d) Aufruf der in der Sammel-Tabelle des Ladetyps eingetragenen Sammelroutinen (Einschub: eine Datensammelroutine ist eine Methode einer Objektklasse) aufgerufen. An diese Datensammelroutine wird als Filterinformation das Ladetypkennzeichen übergeben, denn in der Objektklasse, auf die über diese Sammelroutine zugegriffen wird, können auch Daten anderer Ladetypen enthalten sein. Es werden also nur die für den jeweiligen Ladetyp relevanten Daten aus der Objektklasse gefiltert und in einem vorgegebenen Bereich im CP gesammelt. Notwendige Kontrolldaten für die Einarbeitung auf der Zielplattform (Länge der gesammelten Daten, Objectklassenkennzeichen) werden ebenfalls an die DDF übergeben. Im Spezialfall, daß die Objektklasse plattformindividuelle Daten enthält, muß die Datensammelroutine in einer zusätzlichen Schleife für alle zu ladenden Plattformen mit der Plattform als Filterinformation aufgerufen werden.
e) Hat man alle Daten eines Ladetyps gesammelt, kann der Broadcast-Transfer zu den Zielplattformen (bestimmt in c)) angestossen werden. Dabei sind auch Spezialfälle, wie z.B. daß der verfügbare Bereich im CP zum Aufnehmen der gesammelten Daten nicht ausreicht, mit berücksichtigt. In diesem Fall wird der Transfer mit den bisher gesammelten Daten angestossen und die DDF erneut aufgerufen, um die restlichen Daten zu sammeln.
f) Auf der/den Zielplattform(en) erfolgt die Einarbeitung der Daten mithilfe der mitgeschickten Kontrolldaten (Längeninformation, Objektklassenkennzeichen). Die Zielplattformen können dabei parallel arbeiten und sind nicht vom Zentralprozessor abhängig.
g) Beim letzten Datenblock einer ADB, der per Broadcast an die Zielplattform(en) geschickt wird, wird ein spezielles Kennzeichen mitgegeben. Nach der Einarbeitung des letzten Datenblocks einer ADB auf der Zielplattform erfolgt nämlich eine entsprechende Meldung an die Systemhochlauf-Kontrolle zur Synchronisierung.

Durch die Erfindung wird die Verteilung der Daten abstrahiert, d.h. es wird nicht mehr direkt in der Programmlogik angegeben, wohin und wie Daten verteilt werden sollen. Durch die Einführung der Metadaten, die sehr einfach durch die Dateneigentümer (die Verantwortlichen für eine ADB) gepflegt und geändert werden können, kann der Verteilmechanismus DDF die Daten auch sehr schnell verteilen.

Die ganze Intelligenz (welche Daten sind wohin zu verteilen) steckt ausschließlich in Tabellen, die durch die Dateneigentümer anhand des vom DDF definierten Grundmusters erzeugt und belegt werden (durch das eigens hierfür stark erweiterte Feature des 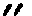 Table Announcement").

Die Erfindung gewinnt also immer mehr an Bedeutung, je komplexer und verteilter ein System wird. Die Erfindung ist nicht beschränkt auf Vermittlungssysteme in der Telekomunikation, sondern läßt sich prinzipiell bei allen verteilten Systemen anwenden.

## Patentansprüche

1. Verfahren zur Steuerung der Datenverteilung in einem Rechnersystem, demgemäß
a)die Daten einer Datenbasis des Rechnersystems von einer Datenverteilkomponente (DDF) auf Plattformen des Rechnersystems verteilt werden,
b)von der Datenverteilkomponente aus mindestens einer Tabelle die Steuerinformationen (Metadaten) entnommen werden, die angeben, welche Daten der Datenbasis auf welche Plattformen des Rechnersystems verteilt werden sollen.

2. Verfahren nach Anspruch 1,
**dadurch gekennzeichnet,** daß
die in die genannte(n) Tabelle(n) aufzunehmenden Steuerinformationen durch ein ein Table Announcement in einer Datenbasis angegeben bzw. festgelegt werden.

3. Verfahren nach einem der Ansprüche 1 oder 2,
**dadurch gekennzeichnet,** daß
die Daten einer Datenbasis gruppenweise gesammelt werden und die gruppenweise gesammelten Daten per Broadcast an die für die Gruppe (Ladetyp) spezifischen Plattformen verteilt werden.

4. Rechnersystem, mit
a)Plattformen, die Code von Programmen und Daten von mindestens einer Datenbasis aufnehmen,
b)einer auf mindestens einer Plattform ablaufende Datenverteilkomponente (DDF), die die Daten einer Datenbasis auf mindestens eine andere Plattform verteilt,
c)mindestens einer Tabelle, aus der die genannte Datenverteilkomponente die Information entnimmt, welche Daten der genannten Datenbasis sie auf welche Plattform verteilen soll.

5. Rechnersystem nach 4,
**gekennzeichnet durch**
ein Table Announcement, durch das eine Datenbasis Steuerinformationen zur Aufnahme in die genannte(n) Tabelle(n) angibt.

6. Rechenersystem nach einem der Ansprüche 4 oder 5,
**dadurch gekennzeichnet,** daß
die Datenverteilkomponente (DDF) die Daten einer Datenbasis gruppenweise sammelt und die gruppenweise gesammelten Daten per Broadcast an die für die Gruppe (Ladetyp) spezifischen Plattformen verteilt.

7. Datenverteilungs-Komponente eines Rechnersystems, die
a)die Daten einer Datenbasis des verteilten Systems auf Plattformen des Systems verteilt,
b) die Steuerinformationen, die angeben, welche Daten der Datenbasis sie auf welche Plattformen des Rechnersystems verteilen soll, aus mindestens einer Tabelle entnimmt.

8. Datenverteilungs-Komponente nach Anspruch 7,
die Steuerinformationen durch die Datenbasis selbst angegeben sind.
